# EUROPÄISCHE PATENTSCHRIFT

(11) **EP 1 816 487 B1**
(45) Veröffentlichungstag und Bekanntmachung des Hinweises auf die Patenterteilung: **19.11.2008**
(21) Anmeldenummer: 07001431.1
(22) Anmeldetag: 24.01.2007
(51) Int. Cl.: G01V 8/20

(54) **Lichtschrankenanordnung**
Light barrier
Barrière optique

(30) Priorität: 04.02.2006 DE 102006005152
(43) Veröffentlichungstag der Anmeldung: 08.08.2007
(73) Patentinhaber: Leuze lumiflex GmbH + Co. KG, 82256 Fürstenfeldbruck (DE)
(72) Erfinder: Rohbeck, Volker, Dr., 85244 Röhrmoos (DE)
(74) Vertreter: Ruckh, Rainer Gerhard

(56) Entgegenhaltungen:
- EP-A1- 0 964 272
- EP-A2- 1 331 434
- DE-A1- 10 227 710
- DE-A1- 19 831 493
- US-A1- 2001 040 213

## Beschreibung

Die Erfindung betrifft eine Lichtschrankenanordnung gemäß dem Oberbegriff des Anspruchs 1.

Lichtschrankenanordnungen der in Rede stehenden Art sind von Lichtschranken, insbesondere Mehrstrahl-Lichtschranken gebildet. Derartige Mehrstrahl-Lichtschranken weisen eine Sendereinheit und eine Empfängereinheit auf, die an gegenüberliegenden Rändern eines Überwachungsbereichs angeordnet sind. Die Sendereinheit umfasst eine vorgegebene Anzahl von Sendelichtstrahlen emittierenden Sendern, die Empfängereinheit umfasst eine vorgegebene Anzahl von Empfängern. Jedem Sender ist vorzugsweise ein Empfänger derart zugeordnet, dass bei freiem Überwachungsbereich die vom Sender emittierten Sendelichtstrahlen zum zugeordneten Empfänger geführt sind. Bei einem Objekteingriff in den Überwachungsbereich wird wenigstens der Strahlengang der Sendelichtstrahlen eines Senders zum zugeordneten Empfänger unterbrochen, wodurch in der Empfängereinheit ein entsprechendes Objektfeststellungssignal geniert wird.

Lichtschrankenanordnungen dieser Art können insbesondere als Lichtgitter oder Lichtvorhänge ausgebildet sein. Ein derartiges Lichtgitter ist aus der DE 39 39 191 A1 bekannt. Die Sender und die Empfänger des Lichtgitters werden zyklisch aktiviert, wobei die Synchronisierung der Sender und Empfänger optisch über die von einem der Sender emittierten Sendelichtstrahlen erfolgt. Derartige Lichtgitter werden insbesondere im Bereich des Personenschutzes eingesetzt, wobei mit derartigen Lichtgittern Gefahrenbereiche an Maschinen abgesichert werden.

Der jeweilige Betriebsmodus eines Lichtgitters wird durch die Vorgabe von Parametern für dessen Empfänger und Sender definiert. Ein Problem bei derartigen Lichtgittern besteht darin, wenn bei einem Defekt der Sendereinheit oder Empfängereinheit diese defekte Einheit durch eine jeweils neue Einheit ausgetauscht werden muss. In diesem Fall müssen in die jeweils neue Sendereinheit oder Empfängereinheit die jeweiligen Parameter neu eingegeben werden, was äußerst zeitaufwendig ist.

Ein derartiger Einlernvorgang zur Eingabe der neuen Parameter in das Lichtgitter bei Austausch einer Sendereinheit oder Empfängereinheit kann dann vermieden werden, wenn das Lichtgitter über ein Bussystem an eine übergeordnete Steuerung angeschlossen ist, in welcher die Parameter zentral abgelegt werden können. Nachteilig hierbei ist jedoch, dass eine derartige Anbindung eines Lichtgitters einen erheblichen Schaltungsaufwand darstellt. Zudem steht in vielen Lichtgitter-Applikationen eine derartiges Bussystem als Anschlussmöglichkeit an eine übergeordnete Steuerung nicht zur Verfügung.

Weiterhin ist es bekannt für derartige Lichtgitter oder Lichtschrankenanordnungen Steckmodule bereitzustellen, wobei an jeweils ein Steckmodul die Sendereinheit und die Empfängereinheit anschließbar sind. In diesen Steckmodulen können dann die jeweiligen Parameter für die Sendereinheit oder Empfängereinheit abgespeichert sein. Wird dann im Falle eines Defekts einer Sendereinheit oder Empfängereinheit die jeweilige defekte Einheit durch eine neue Einheit ersetzt, so kann diese die Parameter aus dem jeweiligen Steckmodul übernehmen. Vorteilhaft hierbei ist, dass durch die Übernahme der Parameter aus dem Steckmodul ein aufwendiger Einlernvorgang zur Eingabe der Parameter in die neue Einheit vermieden werden kann. Nachteilig hierbei ist jedoch, dass die Steckmodule als zusätzliche separate Anschlusseinheiten für das Lichtgitter den konstruktiven Aufwand für dieses Lichtgitter in unerwünschter Weise erhöhen.

Die EP 1 331 434 A2 beschreibt eine optoelektronische Schutzeinrichtung umfassend ein oder mehrere Lichtgitter. Das oder jedes Lichtgitter weist eine Anordnung von Lichtstrahlen emittierenden Sendern und Lichtstrahlen empfangenden Empfängern auf. An die Schutzeinrichtung kann ein Monitor als externe Einheit angeschlossen werden, um Parametriervorgänge durchzuführen.

Der Erfindung liegt die Aufgabe zugrunde, eine Lichtschrankenanordnung der eingangs genannten Art bereitzustellen, welche mit möglichst geringem Aufwand parametrisierbar ist.

Zur Lösung dieser Aufgabe sind die Merkmale der Ansprüche 1, 14, 15 und 16 vorgesehen. Vorteilhafte Ausführungsformen und zweckmäßige Weiterbildungen der Erfindung sind in den Unteransprüchen beschrieben.

Die erfindungsgemäße Lichtschrankenanordnung dient zur Erfassung von Objekten in einem Überwachungsbereich und umfasst eine vorgegebene Anzahl von Sendern aufweisende Sendereinheit und einer eine vorgegebene Anzahl von Empfängern aufweisende Empfängereinheit. Bei freiem Überwachungsbereich sind von den Sendern emittierte Sendelichtstrahlen zu zugeordneten Empfängern geführt. Bei einem Objekteingriff ist im Überwachungsbereich durch das Objekt der Strahlengang der von wenigstens einem der Sender emittierten Sendelichtstrahlen zum zugeordneten Empfänger unterbrochen, wodurch in der Empfängereinheit eine Objektmeldung generiert wird. In der Sendereinheit und in der Empfängereinheit ist jeweils eine Speichereinheit vorgesehen. In beiden Speichereinheiten sind jeweils die Sender und die Empfänger kennzeichnende Parameter abgespeichert. Weiterhin ist in der Sendereinheit und in der Empfängereinheit jeweils eine Schnittstelleneinheit integriert. Über die Schnittstelleneinheit sind die Parameter zwischen Sendereinheit und Empfängereinheit übertragbar.

Da bei der erfindungsgemäßen Lichtschrankenanordnung die Parameter der Sender und der Empfänger sowohl in der Sendereinheit als auch in der Empfängereinheit hinterlegt sind und diese Parameter über die Schnittstelleneinheit wahlweise von der Sendereinheit in die Empfängereinheit oder umgekehrt eingelesen werden können, kann bei Austausch einer defekten Sendereinheit oder Empfängereinheit durch eine jeweils neue Einheit diese neue Einheit durch Einlesen der Parameter aus der noch intakten Einheit parametrisiert werden, ohne dass hierfür externe Parameterspeichereinrichtungen vorgesehen sein müssen.

Fällt während des Betriebs der Lichtschrankenanordnung beispielsweise deren Empfängereinheit aus und muss durch eine neue Empfängereinheit ersetzt werden, so können aus der noch intakten Sendereinheit die benötigten Parameter aus der Sendereinheit über die Schnittstelleneinheit in die Empfängereinheit übertragen werden, so dass diese ohne weitere Anpassungen sofort voll funktionsfähig ist. Dasselbe gilt umgekehrt für den Austausch einer defekten Sendereinheit durch eine neue Sendereinheit.

Die jeweils neue Sendereinheit oder Empfängereinheit muss zur Eingabe der Parameter weder geöffnet werden, noch muss diese zur Eingabe der Parameter an übergeordnete Steuerungen, spezifische Systemstecker oder dergleichen angeschlossen werden. Die Parametrisierung der neuen Sendereinheit oder Empfängereinheit für die Lichtschrankenanordnung kann somit mit einem geringen konstruktiven Aufwand schnell und einfach durchgeführt werden. Die gegen eine defekte Sendereinheit oder Empfängereinheit getauschte neue Sendereinheit oder Empfängereinheit kann somit direkt aus der Verpackung entnommen, an die Lichtschrankenanordnung angeschlossen werden und ist sofort funktionsfähig, wodurch ein hoher Bedienkomfort der Lichtschrankenanordnung erzielt wird.

Die Übertragung der Parameter über die Schnittstelleneinheit kann leitungsgebunden erfolgen, wobei hierzu die Schnittstelleneinheit in der Sendereinheit und der Empfängereinheit als serielle Schnittstellen ausgebildet sind, an welche eine Verbindungsleitung angeschlossen werden kann.

Besonders vorteilhaft sind die Schnittstelleneinheiten zur berührungslosen Übertragung der Parameter ausgebildet. Gemäß einer ersten Variante werden die Parameter mittels Funksignalen übertragen, wobei hierzu die Schnittstelleneinheiten jeweils von Funksignalen emittierenden und empfangenden Sende- und Empfangsmodulen gebildet sind.

Gemäß einer weiteren Variante erfolgt mittels der Schnittstelleneinheit eine optische Übertragung der Parameter. In diesem Fall kann besonders vorteilhaft ein Sender der Sendereinheit und ein Empfänger der Empfängereinheit, welche im regulären Betrieb der Lichtschrankenanordnung zur Erfassung von Objekten im Überwachungsbereich genutzt werden, im Parametrierbetrieb zur Übertragung der Parameter von der Sendereinheit und der Empfängereinheit genutzt werden. Zur Übertragung der Parameter von der Empfängereinheit zur Sendereinheit sind als zusätzliche Komponenten der Schnittstelleneinheit in der Empfängereinheit ein Sendeelement und in der Sendereinheit ein Empfangselement vorgesehen, wobei die Parameter mittels von dem Sendeelement emittierten Lichtstrahlen zum Empfangselement übertragen werden.

Die Speichereinheiten in der Sendereinheit und in der Empfängereinheit sind bevorzugt als nicht flüchtige Speicher ausgebildet, so dass eine ausfallsichere Speicherung der Parameter gewährleistet wird.

Insbesondere für den Fall, dass die Lichtschrankenanordnung im Bereich des Personenschutzes eingesetzt wird, sind die Parameter in den Speichereinheiten fehlersicher abgespeichert um das jeweils erforderliche Sicherheitsniveau zu erfüllen. Bei Lichtschrankenanordnungen, insbesondere Lichtgittern, die im Bereich des Personenschutzes eingesetzt werden, weist die Empfängereinheit eine redundante Auswerteeinheit zur fehlersicheren Generierung eines Objektfeststellungssignals auf. Die redundante Auswerteeinheit weist zweikanalige Speichereinheiten auf, die zur fehlersicheren Speicherung der Parameter in der Empfängereinheit genutzt werden können. Die Elektronikkomponenten der Sendereinheit der Lichtschrankenanordnung weisen dagegen auch für den Fall, dass diese im Bereich des Personenschutzes eingesetzt wird, einen einkanaligen Aufbau auf. Um in diesem Fall eine fehlersichere Speicherung der Parameter zu gewährleisten, sind die abgespeicherten Parameter bevorzugt durch Prüfsummen abgesichert.

Die Erfindung ist generell auf Mehrfachanordnungen von Lichtschrankenanordnung erweiterbar, die beispielsweise zur Absicherung komplexer Gefahrenbereiche eingesetzt werden. Dann weisen die einzelnen Lichtschrankenanordnungen vorzugsweise identisch ausgebildete Speichereinheiten und Schnittstelleneinheiten auf, so dass auch Parameter zwischen unterschiedlichen Lichtschrankenanordnungen übertragen werden können. In diesem Fall können die einzelnen Lichtschrankenanordnungen auch als so genannte Transceiver ausgebildet sein. Ein Transceiver umfasst eine Sender- und eine Empfängereinheit, in welcher sowohl die Sender als auch die Empfänger der Lichtschrankenanordnung integriert sind. Der Sender- und Empfängereinheit ist in diesem Fall eine Umlenkeinheit mit Umlenkspiegeln zugeordnet. Die von den einzelnen Sendern emittierten Sendelichtstrahlen durchsetzen dann den Überwachungsbereich, werden an Umlenkspiegeln reflektiert und dabei zweimal um 90° abgelenkt und so zu den zugeordneten Empfängern geführt. In diesem Fall weist die Sender- und Empfängereinheit jedes Transceivers eine Speichereinheit zur Speicherung der Parameter der Sender und Empfänger aller Lichtschrankenanordnungen auf. Zudem weist jeder Transceiver eine Schnittstelleneinheit auf. Über die Schnittstelleneinheiten können Parameter zwischen zwei oder mehreren Transceivern übertragen werden. Bei Ausfall eines Transceivers wird dieser durch einen neuen ersetzt und erhält von einem noch intakten Transceiver die zu seinem Betrieb benötigten Parameter.

Schließlich ist die Erfindung nicht begrenzt auf Mehrfachanordnungen von Lichtschranken. Vielmehr ist die Erfindung generell für Sensoren einsetzbar, wobei diese insbesondere aber nicht zwingend als optische Sensoren ausgebildet sein können. Dabei kann generell eine erfindungsgemäße Mehrfachanordnung auch verschiedenartige Sensoren umfassen.

Die Erfindung wird im Nachstehenden anhand der Zeichnungen erläutert. Es zeigen:
- Figur 1:: Schematische Darstellung eines Lichtgitters mit einer ersten Ausführungsform von Schnittstelleneinheiten zur Übertragung von Parametern.
- Figur 2:: Schematische Darstellung eines Lichtgitters mit einer zweiten Ausführungsform von Schnittstelleneinheiten zur Übertragung von Parametern.
- Figur 3:: Schematische Darstellung eines Lichtgitters mit einer dritten Ausführungsform von Schnittstelleneinheiten zur Übertragung von Parametern.

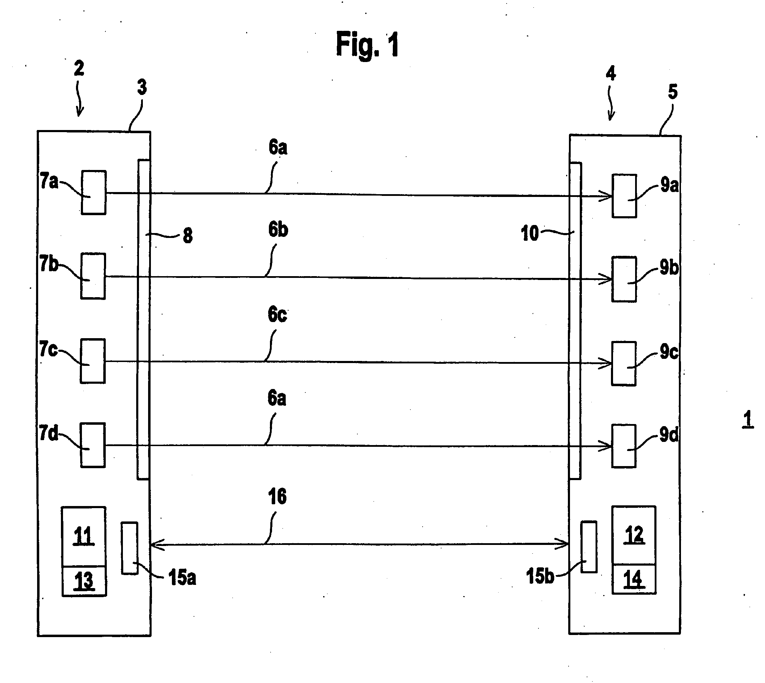

Figur 1 zeigt schematisch eine als Lichtgitter 1 ausgebildete Lichtschrankenanordnung zur Erfassung von Objekten in einem Überwachungsbereich. Das Lichtgitter 1 umfasst eine Sendereinheit 2, die in einem ersten Gehäuse 3 integriert ist und eine Empfängereinheit 4, die in einem zweiten Gehäuse 5 integriert ist. Die Sendereinheit 2 und die Empfängereinheit 4 sind an gegenüberliegenden Rändern des Überwachungsbereichs angeordnet. In der Sendereinheit 2 ist eine Reihenanordnung von identisch ausgebildeten, Sendelichtstrahlen 6a - d emittierenden Sendern 7a - d vorgesehen. Die Sender 7a - d sind von Leuchtdioden oder dergleichen gebildet. Zur Strahlformung der Sendelichtstrahlen 6a - d können nicht dargestellte Sendeoptiken vorgesehen sein. Die Sendelichtstrahlen 6a- d werden durch ein Austrittsfenster 8 in der Frontwand des Gehäuses 5 geführt. In der Empfängereinheit 4 ist eine Reihenanordnung von identisch ausgebildeten Empfängern 9a - d vorgesehen. Die Empfänger 9a - d sind von Photodioden oder dergleichen gebildet. Zur Fokussierung von Sendelichtstrahlen 6a - d auf die Empfänger 9a - d können diesen nicht dargestellte Empfangsoptiken vorgeordnet sein. Die von den Sendern 7a - d emittierenden und im Überwachungsbereich geführten Sendelichtstrahlen 6a - d werden durch ein Eintrittsfenster 10 auf die Empfänger 9a - d geführt.

Die Sender 7a - d und Empfänger 9a - d bilden jeweils zusammenarbeitende Paare derart, dass bei freiem Überwachungsbereich wie in Figur 1 dargestellt, die Sendelichtstrahlen 6a - d des Senders 7a- d eines Paares auf den Empfänger dieses Paares auftreffen. Im vorliegenden Fall weist das Lichtgitter 1 vier Paare von Sendern 7a - d und Empfängern 9a - d auf. Generell kann das Lichtgitter 1 auch eine andere Anzahl von Sendern 7a - d und Empfängern 9a - d aufweisen. Prinzipiell ist auch eine Lichtschrankenanordnung mit nur einem Sender-Empfängerpaar möglich.

In der Sendereinheit 2 ist eine Steuereinheit 11 zur Ansteuerung der Sender 7a - d integriert. Die Steuereinheit 11 kann von einem Mikroprozessor oder dergleichen gebildet sein. Mit der Steuereinheit 11 werden die Sender 7a - d in vorgegebenen Zyklen periodisch einzeln nacheinander aktiviert. In der Empfängereinheit 4 ist eine Auswerteeinheit 12 integriert. Zum Einsatz im Bereich des Personenschutzes weist diese einen zweikanaligen Aufbau bestehend aus zwei sich gegenseitig überwachenden Mikroprozessoren auf. Mit der Empfängereinheit 4 werden die Empfänger 9a - d in vorgegebenen Zyklen periodisch einzeln nacheinander aktiviert. Die Synchronisierung der Sender- und Empfängeraktivierung erfolgt auf optischem Weg, wobei hierzu beispielsweise den Sendelichtstrahlen 6a des ersten Senders 7a eine individuelle Kodierung aufgeprägt sein kann. In der Auswerteeinheit 12 erfolgt zudem die Auswertung der an den Empfängern 9a - d anstehenden Empfangssignale zur Generierung eines Objektfeststellungssignals, welches im vorliegenden Fall als binäres Schaltsignal ausgebildet ist. Bei freiem Überwachungsbereich treffen die Sendelichtstrahlen 6a - d aller Sender 7a - d ungehindert auf die zu zugeordneten Empfänger 9a - d. In diesem Fall nimmt das Schaltsignal den Schaltzustand "freier Überwachungsbereich" ein. Bei einem Objekteingriff in dem Überwachungsbereich werden die Sendelichtstrahlen 6a - d wenigstens eines Senders 7a - d unterbrochen, so dass diese nicht mehr zum Empfänger 9a - d gelangen, was in der Auswerteeinheit 12 registriert wird. Damit nimmt das Schaltsignal den Schaltzustand "Objekt erkannt" ein. Wird das Lichtgitter 1 zur Absicherung eines Gefahrenbereichs an einer Maschine eingesetzt, so wird über das Lichtgitter 1 der Betrieb der Maschine nur dann freigegeben, wenn das Schaltsignal ein Schaltzustand "freier Überwachungsbereich" einnimmt.

In der Steuereinheit 11 der Sendereinheit 2 ist eine erste Speichereinheit 13 vorgesehen. In der Auswerteeinheit 12 der Empfängereinheit 4 ist eine zweite Speichereinheit 14 vorgesehen. In beiden Speichereinheiten 13, 14 sind jeweils die für den Betrieb der Lichtgitter 1 erforderlichen Parameter der Sender 7a- d und der Empfänger 9a - d nicht flüchtig abgespeichert. Als relevante Parameter der Sender 7a - d können beispielsweise Vorgaben über die Modulation der Sendelichtstrahlen 6a - d oder Art und Anzahl der zur Synchronisation des Lichtgitters 1 verwendeten Sendelichtstrahlen 6a - d abgespeichert sein. Als relevante Parameter der Empfänger 9a - d können beispielsweise Schwellwerte abgespeichert sein, mit welchen die Empfangssignale der einzelnen Empfänger bewertet werden. Als weiterer Parameter kann die Auflösung des Lichtgitters 1 hinterlegt sein. Diese Auflösung definiert die Anzahl von unterbrochenen Sendelichtstrahlen 6a - d, die für eine gültige Objekterfassung gefordert wird. Als weitere Parameter können in der Speichereinheit Festlegungen über ein Blanking des Lichtgitters 1 hinterlegt sein. Bei einem derartigen Blanking werden definierte Sendelichtstrahlen 6a - d ausgeblendet, die nicht mehr zur Objekterfassung verwendet werden.

Zur Erfüllung der Sicherheitsanforderungen für den Einsatz des Lichtgitters 1 im Bereich des Personenschutzes sind die Parameter in den Speichereinheiten fehlersicher abgespeichert. Durch den zweikanaligen Aufbau der Auswerteeinheit 12 weist deren Speichereinheit 13 bevorzugt ebenfalls einen redundanten Aufbau auf, wodurch eine fehlersichere Speicherung der Parameter gewährleistet ist. Die Steuereinheit 11 der Sendereinheit 2 und damit die dort integrierte Speichereinheit 13 weist einen einkanaligen Aufbau auf. Um in dieser die Parameter fehlersicher zu speichern, werden die dort hinterlegten Parameter mit Prüfsummen gesichert. Insbesondere können die Parameter in dieser Speichereinheit 13 doppelt mit Invertierung hinterlegt werden und zudem mit Prüfsummen abgesichert sein.

In der Sendereinheit 2 und Empfängereinheit 4 ist jeweils eine Schnittstelleneinheit integriert. Über die Schnittstelleneinheiten können die Parameter von der Sendereinheit 2 zur Empfängereinheit 4 und umgekehrt übertragen werden. Im vorliegenden Fall sind als Schnittstelleneinheit in der Sendereinheit 2 und in der Empfängereinheit 4 jeweils ein Sende- und Empfangsmodul 15a, b integriert. Mit diesen Sende- und Empfangsmodulen 15a, b können Funksignale 16 bidirektional zwischen der Sendereinheit 2 und der Empfängereinheit 4 zum Übersenden der Parameter gesendet werden.

Fällt während des Betriebs des Lichtgitters 1 die Sendereinheit 2 oder die Empfängereinheit 4 aufgrund eines Defektes aus und muss durch eine entsprechende neue Einheit ersetzt werden, so sind in dieser neuen Einheit die aktuellen Parameter, die für den Betrieb des Lichtgitters 1 benötigt werden, noch nicht hinterlegt. Die benötigten Parameter werden von der noch intakten Einheit, das heißt der nicht ausgefallenen Empfängereinheit 4 oder Sendereinheit 2 in die neu angeschlossene Einheit über die Schnittstelleneinheiten übertragen. Damit ist das Lichtgitter 1 sofort funktionsfähig, ohne dass ein Einlernvorgang zum Einlernen von Parametern in die neue Einheit durchgeführt werden muss. Auch externe Parameter-Speicher brauchen nicht vorgesehen werden. Der Parametriervorgang wird vorteilhaft durch Betätigen eines Schalters an der Sendereinheit 2 oder Empfängereinheit 4 oder dergleichen ausgelöst. Alternativ kann ein Parametriervorgang automatisch ausgelöst werden, wenn das betreffende Lichtgitter 1 eindeutig als neu gekennzeichnet werden kann.

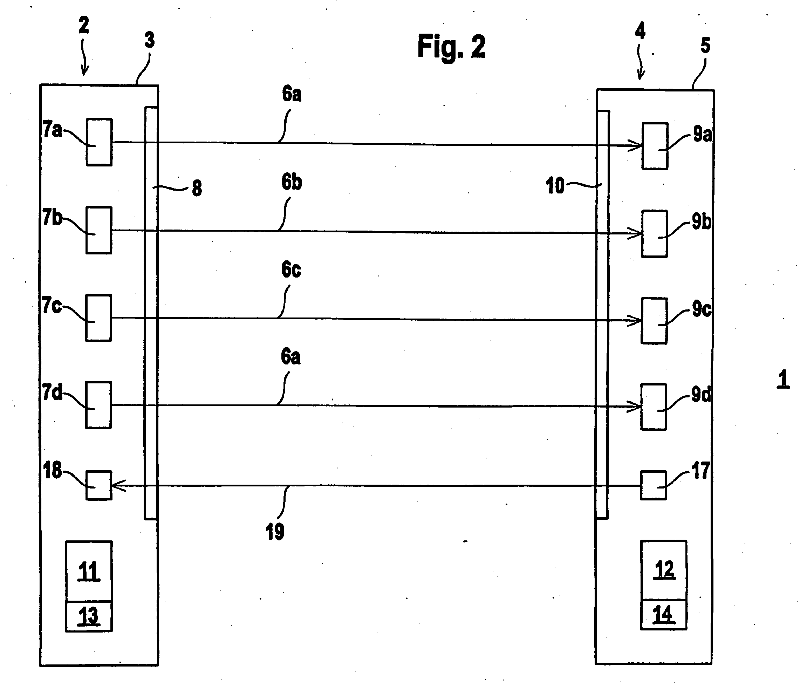

Figur 2 zeigt ein zweites Ausführungsbeispiel eines Lichtgitters 1. Das Lichtgitter 1 gemäß Figur 2 entspricht bis auf die Ausbildung der Schnittstelleneinheit der Ausführungsform gemäß Figur 1. Die Schnittstelleneinheiten sind in diesem Fall als optische Schnittstellen ausgebildet. Als Bestandteil der optischen Schnittstellen werden im vorliegenden Fall der Sender 7d und der Empfänger 9d genutzt, die im regulären Arbeitsbetrieb des Lichtgitters 1 zur Erfassung von Objekten im Überwachungsbereich verwendet weiden. Im Parametrierbetrieb werden durch geeignete Modulation der vom Sender 7d emittierten Sendelichtstrahlen 6d die Parameter von der Sendereinheit 2 zur Empfängereinheit 4 übertragen. Die optischen Schnittstellen werden komplettiert durch ein in der Empfängereinheit 4 integriertes Sendeelement 17 und ein in der Sendereinheit 2 integriertes Empfangselement 18. Vorteilhaft ist das Sendeelement 17 identisch mit den Sendern 7a - d des Lichtgitters 1 ausgebildet. Ebenso ist bevorzugt das Empfangselement 18 identisch mit den Empfängern 9a - d des Lichtgitters 1 ausgebildet. Im Parametrierbetrieb werden mittels von dem Sendeelement 17 in Richtung des Empfangselements 18 emittierten Lichtstrahlen 19 die Parameter von der Empfängereinheit 4 zur Sendereinheit 2 übertragen.

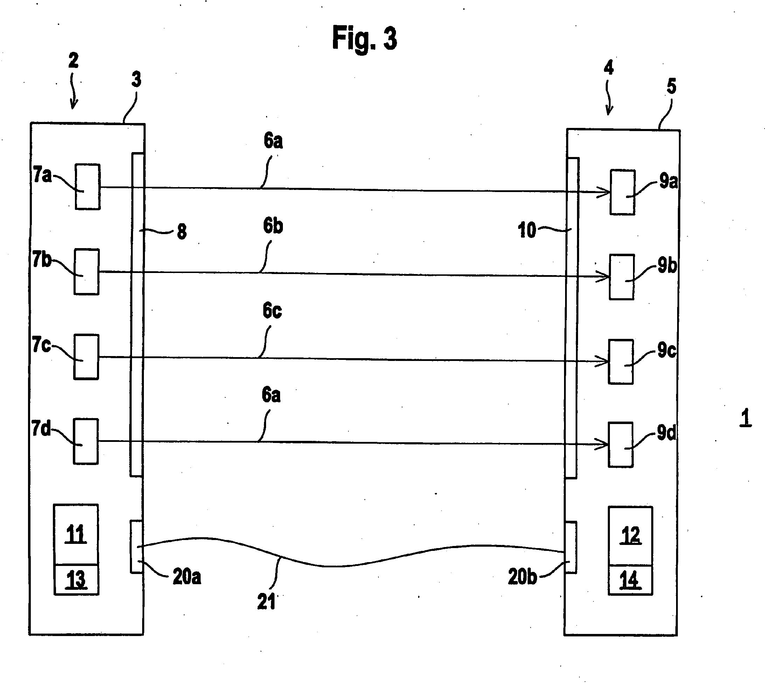

Figur 3 zeigt ein drittes Ausführungsbeispiel eines Lichtgitters 1. Auch das in Figur 3 dargestellte Lichtgitter 1 unterscheidet sich von der Ausführungsform gemäß Figur 1 lediglich hinsichtlich der Ausbildung der Schnittstelleneinheiten. Während bei den Ausführungsformen gemäß den Figuren 1 und 2 eine berührungslose Übertragung der Parameter erfolgt, ist bei der Ausführungsform gemäß Figur 3 eine leitungsgebundene Übertragung der Parameter vorgesehen. Hierzu ist in der Sendereinheit 2 und in der Empfängereinheit 4 jeweils eine serielle Schnittstelle 20a, b vorgesehen. Diese die Schnittstelleneinheiten bildenden seriellen Schnittstellen 20a, b werden zur Übertragung der Parameter über eine Verbindungsleitung 21 verbunden.

### Bezugszeichenliste

- (1): Lichtgitter
- (2): Sendereinheit
- (3): Gehäuse
- (4): Empfängereinheit
- (5): Gehäuse
- (6a-d): Sendelichtstrahl
- (7a-d): Sender
- (8): Austrittsfenster
- (9a-d): Empfänger
- (10): Eintrittsfenster
- (11): Steuereinheit
- (12): Auswerteeinheit
- (13): Speichereinheit
- (14): Speichereinheit
- (15a): Sende- und Empfangsmodul
- (15b): Sende- und Empfangsmodul
- (16): Funksignal
- (17): Sendeelement
- (18): Empfangselement
- (19): Lichtstrahl
- (20a): Schnittstelle
- (20b): Schnittstelle
- (21): Verbindungsleitung

## Patentansprüche

1. Lichtschrankenanordnung zur Erfassung von Objekten in einem Überwachungsbereich, mit einer eine vorgegebene Anzahl von Sendern aufweisenden Sendereinheit und einer eine vorgegebene Anzahl von Empfängern aufweisenden Empfängereinheit, wobei bei freiem Überwachungsbereich von den Sendern emittierte Sendelichtstrahlen zu zugeordneten Empfängern geführt sind, und wobei bei einem Objekteingriff im Überwachungsbereich durch das Objekt der Strahlengang der von wenigstens einem der Sender emittierten Sendelichtstrahlen zum zugeordneten Empfänger unterbrochen ist, wodurch in der Empfängereinheit eine Objektmeldung generiert wird, **dadurch gekennzeichnet, dass** in der Sendereinheit (2) und in der Empfängereinheit (4) jeweils eine Speichereinheit (13, 14) vorgesehen ist, wobei in beiden Speichereinheiten (13, 14) jeweils die Sender (7a - d) und die Empfänger (9a - d) kennzeichnende Parameter abgespeichert sind, und dass in der Sendereinheit (2) und in der Empfängereinheit (4) jeweils eine Schnittstelleneinheit integriert ist, wobei über die Schnittstelleneinheiten die Parameter zwischen Sendereinheit (2) und Empfängereinheit (4) übertragbar sind.

2. Lichtschrankenanordnung nach Anspruch 1, **dadurch gekennzeichnet, dass** bei Austausch der Sendereinheit (2) die Parameter von der Empfängereinheit (4) in die neue Sendereinheit (2) übertragbar sind.

3. Lichtschrankenanordnung nach einem der Ansprüche 1 oder 2, **dadurch gekennzeichnet, dass** bei Austausch der Empfängereinheit (4) die Parameter von der Sendereinheit (2) in die neue Empfängereinheit (4) übertragbar sind.

4. Lichtschrankenanordnung nach einem der Ansprüche 1 bis 3, **dadurch gekennzeichnet, dass** die Speichereinheiten (13, 14) jeweils als nichtflüchtige Speichereinheiten (13, 14) ausgebildet sind.

5. Lichtschrankenanordnung nach einem der Ansprüche 1 bis 4, **dadurch gekennzeichnet, dass** die Parameter in den Speichereinheiten (13, 14) fehlersicher abgespeichert sind.

6. Lichtschrankenanordnung nach Anspruch 5, **dadurch gekennzeichnet, dass** jede Speichereinheit (13, 14) eine zweikanalige Struktur aufweist.

7. Lichtschrankenanordnung nach Anspruch 5, **dadurch gekennzeichnet, dass** die Speicherung der Parameter in den Speichereinheiten (13, 14) durch Prüfsummen abgesichert ist.

8. Lichtschrankenanordnung nach einem der Ansprüche 1 bis 7, **dadurch gekennzeichnet, dass** die in der Sendereinheit (2) und der Empfängereinheit (4) integrierten Schnittstelleneinheiten jeweils von einem Funksignal sendenden und empfangenden Sende- und Empfangsmodul (15a, b) gebildet sind.

9. Lichtschrankenanordnung nach einem der Ansprüche 1 bis 7, **dadurch gekennzeichnet, dass** die in der Sendereinheit (2) und der Empfängereinheit (4) integrierten Schnittstelleneinheiten von seriellen Schnittstellen (20a, b) gebildet sind, die über eine Verbindungsleitung verbindbar sind.

10. Lichtschrankenanordnung nach einem der Ansprüche 1 bis 7, **dadurch gekennzeichnet, dass** die in der Sendereinheit (2) und der Empfängereinheit (4) integrierten Schnittstelleneinheit als optische Schnittstelleneinheiten ausgebildet sind.

11. Lichtschrankenanordnung nach Anspruch 10, **dadurch gekennzeichnet, dass** ein Sender (7a - d) der Sendereinheit (2) und ein diesem Sender (7a - d) zugeordneter Empfänger (9a - d) der Empfängereinheit (4) eine optische Schnittstelleneinheit bilden, wobei mit den vom Sender (7a - d) emittierten Sendelichtstrahlen (6a - d) Parameter von der Sendereinheit (2) in die Empfängereinheit (4) übertragen werden.

12. Lichtschrankenanordnung nach einem der Ansprüche 10 oder 11, **dadurch gekennzeichnet, dass** zur Ausbildung einer optischen Schnittstelleneinheit in der Empfängereinheit (4) ein Lichtstrahlen (19) emittierendes Sendeelement (17) integriert ist und in der Sendereinheit (2) ein Empfangselement (18) integriert ist, wobei mit den vom Sendeelement (17) emittierten Lichtstrahlen (19) Parameter von der Empfängereinheit (4) in die Sendereinheit (2) übertragen werden.

13. Lichtschrankenanordnung nach Anspruch 12, **dadurch gekennzeichnet, dass** das Sendeelement (17) baugleich mit den Sendern (7a-d) der Sendereinheit (2) ist, und dass das Empfangselement (18) baugleich mit den Empfängern (9a - d) der Empfängereinheit (4) ist.

14. Mehrfachanordnung von Lichtschrankenanordnungen gemäß einem der Ansprüche 1 bis 13, **dadurch gekennzeichnet, dass** über die Schnittstelleneinheit Parameter zwischen unterschiedlichen Lichtschrankenanordnungen austauschbar sind.

15. Mehrfachanordnung von Lichtschrankenanordnungen gemäß Anspruch 14, **dadurch gekennzeichnet, dass** jede Lichtschrankenanordnung eine Sender- und Empfängereinheit aufweist, in welchen Paare von Sendelichtstrahlen emittierenden Sendern und Empfängern integriert sind, und dass in jeder Sender- und Empfängereinheit eine Speichereinheit zur Speicherung von Parametern der Sender (7a - d) und Empfänger (9a - d) vorgesehen ist, und dass in jeder Sender- und Empfängereinheit jeweils eine Schnittstelleneinheit integriert, wobei über die Schnittstelleneinheiten verschiedener Lichtschrankenanordnungen die Parameter übertragbar sind.

16. Mehrfachanordnung von Sensoren nach einem der Ansprüche 1 bis 13, **dadurch gekennzeichnet, dass** jeder Sensor eine Speichereinheit zur Speicherung von Parametern und eine Schnittstelleneinheit aufweist, wobei über die Schnittstelleneinheiten die Parameter von Sensoren übertragbar sind.

17. Mehrfachanordnung von Sensoren nach Anspruch 16, **dadurch gekennzeichnet, dass** die Sensoren unterschiedlich ausgebildet sind.

18. Mehrfachanordnung von Sensoren nach einem der Ansprüche 16 oder 17, **dadurch gekennzeichnet, dass** die Sensoren optische Sensoren sind.

## Claims

1. Light barrier arrangement for detection of objects in a monitoring region, with a transmitter unit having a predetermined number of transmitters and a receiver unit having a predetermined number of receivers, wherein, when the monitoring region is free, transmitted light beams emitted by the transmitters are led to associated receivers and wherein, when there is object intervention in the monitoring region, the beam path of the transmitted light beams, which are emitted by at least one of the transmitters, to the associated receiver is interrupted by the object, whereby an object report is generated in the receiver unit, **characterised in that** a respective memory unit (13, 14) is provided in each of the transmitter unit (2) and the receiver unit (4), wherein parameters respectively characterising the transmitters (7a - d) and the receivers (9a - d) are stored in the two memory units (13, 14), and that a respective interface unit is integrated in each of the transmitter unit (2) and the receiver unit (4), wherein the parameters are transmissible between transmitter unit (2) and receiver unit (4) by way of the interface units.

2. Light barrier arrangement according to claim 1, **characterised in that** on exchange of the transmitter unit (2) the parameters are transmissible by the receiver unit (4) to the new transmitter unit (2).

3. Light barrier arrangement according to one of claims 1 and 2, **characterised in that** on exchange of the receiver unit (4) the parameters are transmissible by the transmitter unit (2) to the new receiver unit (4).

4. Light barrier arrangement according to any one of claims 1 to 3, **characterised in that** the memory units (13, 14) are respectively constructed as non-volatile memory units (13, 14).

5. Light barrier arrangement according to any one of claims 1 to 4, **characterised in that** the parameters are stored in the memory units (13, 14) with protection against error.

6. Light barrier arrangement according to claim 5, **characterised in that** each memory unit (13, 14) has a two-channel structure.

7. Light barrier arrangement according to claim 5, **characterised in that** the storage of the parameters in the memory units (13, 14) is protected by checksums.

8. Light barrier arrangement according to any one of claims 1 to 7, **characterised in that** the interface units integrated in the transmitter unit (2) and the receiver unit (4) are respectively formed by transmitting and receiving modules (15a, b) transmitting and receiving a radio signal.

9. Light barrier arrangement according to any one of claims 1 to 7, **characterised in that** the interface units integrated in the transmitter unit (2) and the receiver unit (4) are formed by serial interfaces (20a, b) connectible by way of a connecting line.

10. Light barrier arrangement according to any one of claims 1 to 7, **characterised in that** the interface unit integrated in the transmitter unit (2) and the receiver unit (4) are constructed as optical interface units.

11. Light barrier arrangement according to claim 10, **characterised in that** a transmitter (7a - d) of the transmitter unit (2) and a receiver (9a - d), which is associated with this transmitter (7a - d) of the receiver unit (4) form an optical interface unit, wherein parameters of the transmitter unit (2) are transmitted to the receiver unit (4) by the transmitted light beams (6a - d) emitted by the transmitter (7a - d).

12. Light barrier arrangement according to one of claims 10 and 11, **characterised in that** for construction of an optical interface unit a transmitting element (17) emitting light beams (19) is integrated in the receiver unit (4) and a receiving element (18) is integrated in the transmitter unit (2), wherein parameters are transmitted from the receiver unit (4) to the transmitter unit (2) by the light beams (19) emitted by the transmitting element (17).

13. Light barrier arrangement according to claim 12, **characterised in that** the transmitting element (17) is identical in construction with the transmitters (7a - d) of the transmitter unit (2) and the receiving element (18) is identical in construction with the receivers (9a - d) of the receiver unit (4).

14. Multiple arrangement of light barrier arrangements according to any one of claims 1 to 13, **characterised in that** parameters are exchangeable between different light barrier arrangements by way of the interface unit.

15. Multiple arrangement of light barrier arrangements according to claim 14, **characterised in that** each light barrier arrangement comprises a transmitter and receiver unit in which pairs of transmitters and receivers emitting transmitted light beams are integrated, that a memory unit for storage of parameters of the transmitters (7a - d) and receivers (9a - d) is provided in each transmitter and receiver unit, and that a respective interface unit is integrated in each transmitter and receiver unit, wherein the parameters are transmissible by way of the interface units of different light barrier arrangements.

16. Multiple arrangement of sensors according to any one of claims 1 to 13, **characterised in that** each sensor comprises a memory unit for storage of parameters and an interface unit, wherein the parameters of sensors are transmissible by way of the interface units.

17. Multiple arrangement of sensors according to claim 16, **characterised in that** the sensors are of different construction.

18. Multiple arrangement of sensors according to one of claims 16 and 17, **characterised in that** the sensors are optical sensors.

## Revendications

1. Barrière optique pour détecter des objets dans une zone de surveillance, avec une unité émettrice présentant un nombre prédéfini d'émetteurs et une unité réceptrice présentant un nombre prédéfini de récepteurs, des rayons lumineux d'émission émis par les émetteurs étant guidés vers des récepteurs associés lorsque la zone de surveillance est libre, et, en cas d'intrusion d'un objet dans la zone de surveillance, le chemin optique des rayons lumineux d'émission émis par au moins un des émetteurs vers le récepteur associé étant interrompu, ce qui a pour effet de générer une signalisation d'objet dans l'unité réceptrice, **caractérisée en ce qu'**une unité de mémorisation (13, 14) est prévue chaque fois dans l'unité émettrice (2) et dans l'unité réceptrice (4), des paramètres caractérisant les émetteurs (7a - d) et les récepteurs (9a - d) étant mémorisés dans les deux unités de mémorisation (13, 14) respectives, et qu'une unité d'interface est intégrée chaque fois dans l'unité émettrice (2) et dans l'unité réceptrice (4), les paramètres étant transmissibles entre unité émettrice (2) et unité réceptrice (4) via les unités d'interface.

2. Barrière optique selon la revendication 1, **caractérisée en ce qu'**en cas d'échange de l'unité émettrice (2), les paramètres sont transmissibles de l'unité réceptrice (4) dans la nouvelle unité émettrice (2).

3. Barrière optique selon l'une des revendications 1 ou 2, **caractérisée en ce qu'**en cas d'échange de l'unité réceptrice (4), les paramètres sont transmissibles de l'unité émettrice (2) dans la nouvelle unité réceptrice (4).

4. Barrière optique selon l'une des revendications 1 à 3, **caractérisée en ce que** les unités de mémorisation (13, 14) sont réalisées sous la forme d'unités de mémorisation (13, 14) non volatiles.

5. Barrière optique selon l'une des revendications 1 à 4, **caractérisée en ce que** les paramètres sont mémorisés dans les unités de mémorisation (13, 14) de manière protégée contre les erreurs.

6. Barrière optique selon la revendication 5, **caractérisée en ce que** chaque unité de mémorisation (13, 14) présente une structure à deux canaux.

7. Barrière optique selon la revendication 5, **caractérisée en ce que** la mémorisation des paramètres dans les unités de mémorisation (13, 14) est protégée par des sommes de contrôle.

8. Barrière optique selon l'une des revendications 1 à 7, **caractérisée en ce que** les unités d'interface intégrées dans l'unité émettrice (2) et l'unité réceptrice (4) sont chaque fois formées par un module d'émission et de réception (15a, b) émettant et recevant un signal radio.

9. Barrière optique selon l'une des revendications 1 à 7, **caractérisée en ce que** les unités d'interface intégrées dans l'unité émettrice (2) et l'unité réceptrice (4) sont formées par des interfaces série (20a, b) qui peuvent être reliées par l'intermédiaire d'un câble de liaison.

10. Barrière optique selon l'une des revendications 1 à 7, **caractérisée en ce que** les unités d'interface intégrées dans l'unité émettrice (2) et l'unité réceptrice (4) sont réalisées sous la forme d'unités d'interface optiques.

11. Barrière optique selon la revendication 10, **caractérisée en ce qu'**un émetteur (7a - d) de l'unité émettrice (2) et un récepteur (9a - d) associé à cet émetteur (7a - d) de l'unité réceptrice (4) forment une unité d'interface optique, des paramètres étant transmis de l'unité émettrice (2) dans l'unité réceptrice (4) avec les rayons lumineux d'émission (6a - d) émis par l'émetteur (7a - d).

12. Barrière optique selon l'une des revendications 10 ou 11, **caractérisée en ce que** pour réaliser une unité d'interface optique, un élément émetteur (17) émettant des rayons lumineux (19) est intégré dans l'unité réceptrice (4) et un élément récepteur (18) intégré dans l'unité émettrice (2), des paramètres étant transmis de l'unité réceptrice (4) dans l'unité émettrice (2) avec les rayons lumineux (19) émis par l'élément émetteur (17).

13. Barrière optique selon la revendication 12, **caractérisée en ce que** l'élément émetteur (17) est identique aux émetteurs (7a - d) de l'unité émettrice (2) et que l'élément récepteur (18) est identique aux récepteurs (9a - d) de l'unité réceptrice (4).

14. Disposition multiple de barrières optiques selon l'une des revendications 1 à 13, **caractérisée en ce que** des paramètres sont échangeables entre différentes barrières optiques par l'intermédiaire de l'unité d'interface.

15. Disposition multiple de barrières optiques selon la revendication 14, **caractérisée en ce que** chaque barrière optique présente une unité émettrice et réceptrice dans laquelle sont intégrées des paires d'émetteurs émettant des rayons lumineux d'émission et de récepteurs, et qu'une unité de mémorisation pour mémoriser des paramètres des émetteurs (7a - d) et des récepteurs (9a - d) est prévue dans chaque unité émettrice et réceptrice, et que chaque unité émettrice et réceptrice est intégrée une unité d'interface, les paramètres étant transmissibles par l'intermédiaire des unités d'interface de différentes barrières optiques.

16. Disposition multiple de capteurs selon l'une des revendications 1 à 13, **caractérisée en ce que** chaque capteur présente une unité de mémorisation pour mémoriser des paramètres et une unité d'interface, les paramètres de capteurs étant transmissibles par l'intermédiaire des unités d'interface.

17. Disposition multiple de capteurs selon la revendication 16, **caractérisée en ce que** les capteurs sont réalisés sous des formes différentes.

18. Disposition multiple de capteurs selon l'une des revendications 16 ou 17, **caractérisée en ce que** les capteurs sont des capteurs optiques.
